# EUROPÄISCHE PATENTSCHRIFT

(11) **EP 1 080 989 B1**
(45) Veröffentlichungstag und Bekanntmachung des Hinweises auf die Patenterteilung: **18.02.2009**
(21) Anmeldenummer: 00116989.5
(22) Anmeldetag: 08.08.2000
(51) Int. Cl.: B60P 3/22

(54) **Silodruckbehälter**
Pressure vessel
Récipient sous pression

(30) Priorität: 30.08.1999 DE 19941173
(43) Veröffentlichungstag der Anmeldung: 07.03.2001
(73) Patentinhaber: Spitzer Silo-Fahrzeugwerke GmbH, 74834 Elztal-Dallau (DE)
(72) Erfinder: Tsiapkinakis, Michael, 74821 Mosbach (DE)
(74) Vertreter: Dreiss, Fuhlendorf, Steimle & Becker

(56) Entgegenhaltungen:
- DE-A- 2 810 328
- DE-A- 3 814 108
- DE-U- 29 616 486

## Beschreibung

Die Erfindung betrifft einen Silodruckbehälter, insbesondere für Silofahrzeuge, umfassend einen Druckbehältermantel, wenigstens einen Schüttkegelabschnitt und zwei Druckbehälterbodenteile, wobei die vorstehend genannten Bestandteile miteinander verschweißt sind.

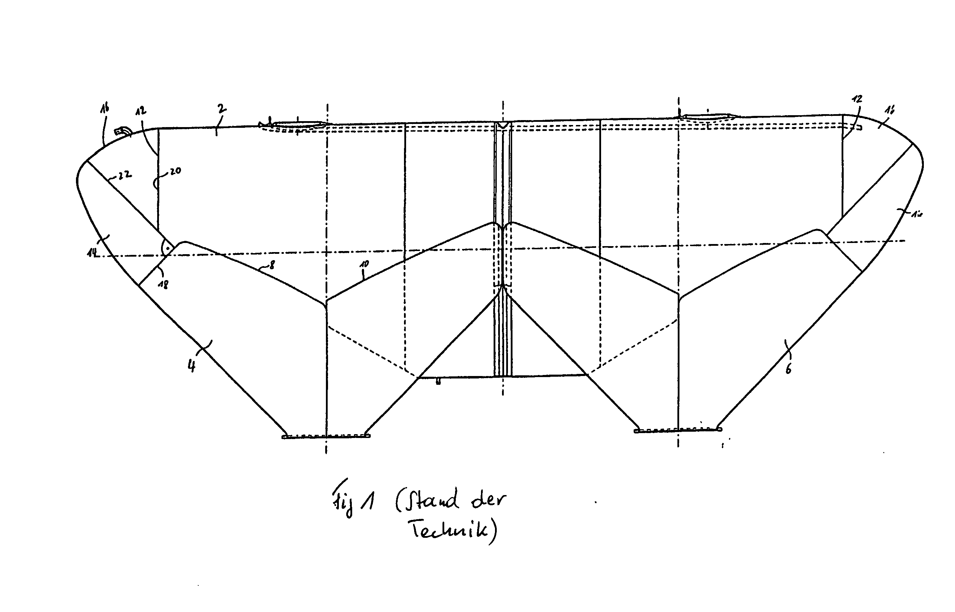

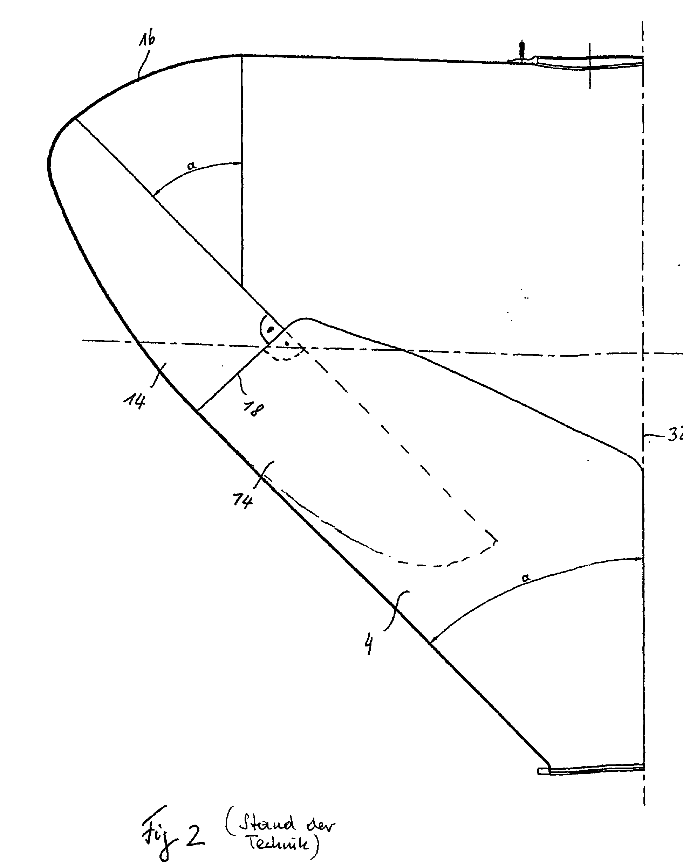

Bei bekannten Silodruckbehältern gemäß Figuren 1 und 2 sind die Druckbehälterbodenteile aus je einer Hälfte eines rotationssymmetrischen gerollten Rondenteils gebildet. Bei der Herstellung dieses Bodenteils wird also zunächst aus einer kreisscheibenförmigen Ronde ein gewölbtes Bodenteil, gegebenenfalls mit ausgeprägten Krempenabschnitten, gerollt, wobei das Bodenteil symmetrisch zur Senkrechten durch den Mittelpunkt der vormals ebenen kreisscheibenförmigen Ronde ausgebildet ist. Dieses Teil wird dann zur Bildung zweier Hälften getrennt. Jede Hälfte wird unter Zwischenordnung eines weiteren, in der Seitenansicht des Silodruckbehälters an eine Dreieckform angenäherten Segments mit dem Druckbehältermantel verschweißt. Im Längsmittelvertikalschnitt durch einen bekannten Silodruckbehälter betrachtet grenzt das Druckbehälterbodenteil oben also nicht an den Druckbehältermantel an, sondern es ist an das zwischengeordnete Segment angefügt, welches seinerseits an den zylindrischen Druckbehältermantel angeschweißt ist. Die Anschweißung an dieses zwischengeordnete Segment erfolgt entlang der freien Ränder der Krempenabschnitte des Druckbehälterbodenteils. Aufgrund der Trennung des symmetrisch gerollten Rondenteils in zwei Hälften zur Bildung der jeweiligen Druckbehälterbodenteile erstrecken sich diese im Längsmittelvertikalschnitt durch den Silodruckbehälter über einen Winkel von exakt 90°. Das jeweilige Bodenteil geht dabei stetig in die Wandung des Schüttkegelabschnitts über.

Aufgrund der notwendigen Anfertigung des im oberen Bereich zwischen das Druckbehälterbodenteil und den Druckbehältermantel vorgesehenen Segments ist die Herstellung dieses bekannten Silodruckbehälters aufwendig.

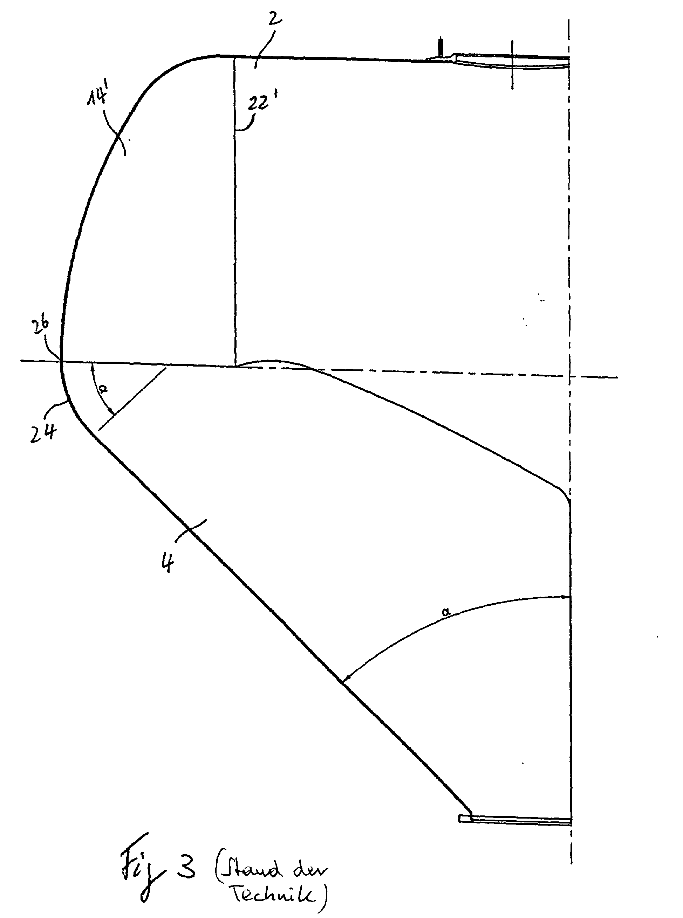

Wenn das zwischengeordnete Segment gemäß Fig 3 weggelassen würde und das jeweilige Druckbehälterbodenteil direkt an den Druckbehältermantel oben angefügt würde, so müsste die Wandung des Schüttkegelabschnitts aufwendig verformt werden, um stetig in das Druckbehälterbodenteil, welches aufgrund seiner Herstellung lediglich 90° überspannen kann, übergehen zu können. Die notwendige Verformung des Schüttkegelabschnittes hätte auch eine höhere Wandstärke zur Folge im Vergleich zum unverformten Schüttkegelabschnitt.

DE 38 14 108 A1 offenbart einen weiteren gattungsgemäßen Silodruckbehälter, bei dem das jeweilige Druckbehälterbodenteil aus zwei gleichen teilweise kugelförmigen Seitenteilen (die aus hauptsächlich gleichen Teilen einer Kugel bestehen) und einem sich zwischen den Seitenteilen erstreckenden Verbindungsstück gebildet ist. Das Verbindungsstück erstreckt sich im Längsmittelvertikalschnitt betrachtet über einen Winkelbereich von mehr als 90°. Es müssen also mehrere Teile miteinander gefügt und aufeinander abgestimmt werden.

Hiervon ausgehend liegt der vorliegenden Erfindung die Aufgabe zugrunde, die Herstellbarkeit eines Silodruckbehälters wirtschaftlicher zu gestalten.

Diese Aufgabe wird bei einem Silodruckbehälter der eingangs genannten Art mit den Merkmalen des kennzeichnenden Teils von Anspruch 1 gelöst. .

Mit der Erfindung wurde also erkannt, dass auf das zwischengeordnete Segment im oberen Bereich des Silodruckbehälters bzw. auf die Verformung des Kegelabschnitts verzichtet werden kann, wenn von der bekannten Herstellung der Druckbehälterbodenteile als je eine Hälfte eines gerollten rotationssymmetrischen Formteils Abstand genommen wird. Nach der Erfindung wird ein jeweiliges Druckbehälterbodenteil als asymmetrisches Pressformteil hergestellt, d.h. es wird zwischen einer Oberschale und einer Unterschale, welche auf geeignete Verformungstemperatur beheizbar sind, auf die schlussendliche Form gebracht. Im Unterschied zu den bekannten Druckbehälterbodenteilen können sich die erfindungsgemäßen Druckbehälterbodenteile, im Längsmittelvertikalschnitt des Silodruckbehälters betrachtet, über mehr als 90° erstrecken. Dies eröffnet die Möglichkeit, im Längsmittelvertikalschnitt betrachtet, oben direkt an den Druckbehältermantel und, in demselben Schnitt betrachtet, unten direkt an den Schüttkegelabschnitt stetig anzuschließen, ohne dass es der Zwischenordnung eines weiteren Segments bedarf. Es ist nach der Erfindung auch nicht erforderlich, dass ein freier Randabschnitt des Schüttkegelabschnitts in irgendeiner Weise verformt werden muss, um einen stetigen Übergang zu dem Druckbehälterbodenteil zu erreichen.

In weiterer Ausbildung der Erfindung hat es sich als besonders vorteilhaft erwiesen, wenn das asymmetrische Pressformteil, im Längsmittelvertikalschnitt betrachtet, aus einem ersten Kreisbogenabschnitt mit Radius R1 ünd einem zweiten Kreisbogenabschnitt mit Radius R2 gebildet ist, die stetig ineinander übergehen.

Weitere Einzelheiten, Merkmale und Vorteile der Erfindung ergeben sich aus der zeichnerischen Darstellung und nachfolgenden Beschreibung bekannter Silodruckbehälter und eines erfindungsgemäß ausgebildeten Silodruckbehälters. In der Zeichnung zeigen:
- Fig. 1:: einen Längsmittelvertikalschnitt eines bekannten Silodruckbehälters;
- Fig. 2:: eine Teilansicht des Druckbehälters nach Fig. 1;
- Fig. 3:: eine der Fig. 2 entsprechende Teilansicht einer weiteren bekannten Ausführungsform eines Silodruckbehälters;
- Fig. 4:: eine der Fig. 1 entsprechende Ansicht einer bevorzugten Ausführungsform des erfindungsgemäßen Silodruckbehälters;
- Fig. 5:: eine Teilansicht des erfindungsgemäßen Silodruckbehälters nach Fig. 4;
- Fig. 6:: eine Ansicht des Druckbehälterbodenteils des erfindungsgemäßen Silodruckbehälters im Längsmittelvertikalschnitt; und
- Fig. 7:: eine Ansicht des Druckbehälterbodenteils nach Fig. 6, gesehen in Richtung des Pfeils VII.

Die Figuren 1 und 2 zeigen einen bekannten Silodruckbehälter mit einem gerollten und im Stoßbereich geschweißten Druckbehältermantel 2. Der Druckbehältermantel 2 umfasst Ausnehmungen, in welche je ein Schüttkegelabschnitt 4, 6 eingesetzt und entlang angedeuteter Schweißnähte 8, 10 mit dem Druckbehältermantel verschweißt ist. Zum Abschluss der einander gegenüberliegenden Bodenöffnungen 12 des Druckbehältermantels 2 ist bei dem bekannten Silodruckbehälter ein Druckbehälterbodenteil 14 und ein weiteres Segment 16 vorgesehen.

Das Druckbehälterbodenteil 14 ist gebildet aus einer Hälfte eines rotationssymmetrisch gerollten, ursprünglich kreisscheibenförmigen Rondenteils, wobei die Trennung in zwei Hälften entlang der mit dem Bezugszeichen 18 bezeichneten Linie erfolgt. In der Fig. 2 ist die Gestalt des rotationssymmetrischen Teils vor dem Trennvorgang entlang der Schnittlinie 18 angedeutet (unterbrochene Linie). Aufgrund dieses Herstellvorgangs überspannt jede Hälfte des Bodenteils 14 einen Winkel von exakt 90°, der in der Fig. 1 und 2 dargestellt ist. Das Segmentteil 16 ist entlang der Linie 20, die in der Längsmittelvertikalschnittansicht der Fig. 1 und 2 als Gerade erscheint, aber in Wirklichkeit kreisbogenförmig verläuft, an den Druckbehältermantel 2 angefügt. Das Druckbehälterbodenteil 14 ist entlang seines krempenförmigen Randabschnittes 22 an das Segmentteil 16 angefügt.

Wie aus Fig. 2 zu ersehen ist, überspannt das Segmentteil 16, im Längsmittelvertikalschnitt gesehen, einen Winkelbereich α. Der Winkel α ist gleichzeitig der Neigungswinekl des Schüttkegelabschnitts 4 zur Vertikalen 32.
Fig. 3 zeigt eine weitere bekannte Ausführungsform eines Silodruckbehälters. Ein entsprechend ausgebildetes Druckbehälterbodenteil 14' ist mit seinem krempenförmigen Rand 22' direkt an den Druckbehältermantel 2 angefügt, ohne dass ein Segmentteil zwischengeordnet ist. Um den in der Fig. 3 dargestellten Winkelbereich α ohne Zwischenordnung eines Segmentteils schließen zu können und dennoch einen stetigen Übergang zwischen Druckbehälterbodenteil 14' und Schüttkegelabschnitt 4 zu erreichen, ist der obere freie Randbereich 24 des Schüttkegelabschnitts 4 jedoch aufwendig verformt worden, um einen stetigen Übergang im Bereich des Bezugszeichens 26 in das Druckbehälterbodenteil 14' zu erreichen.

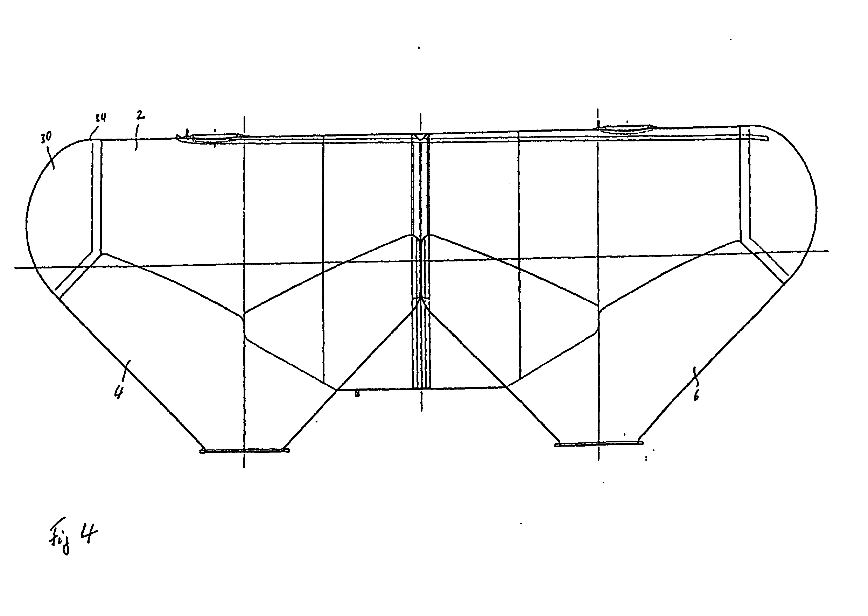

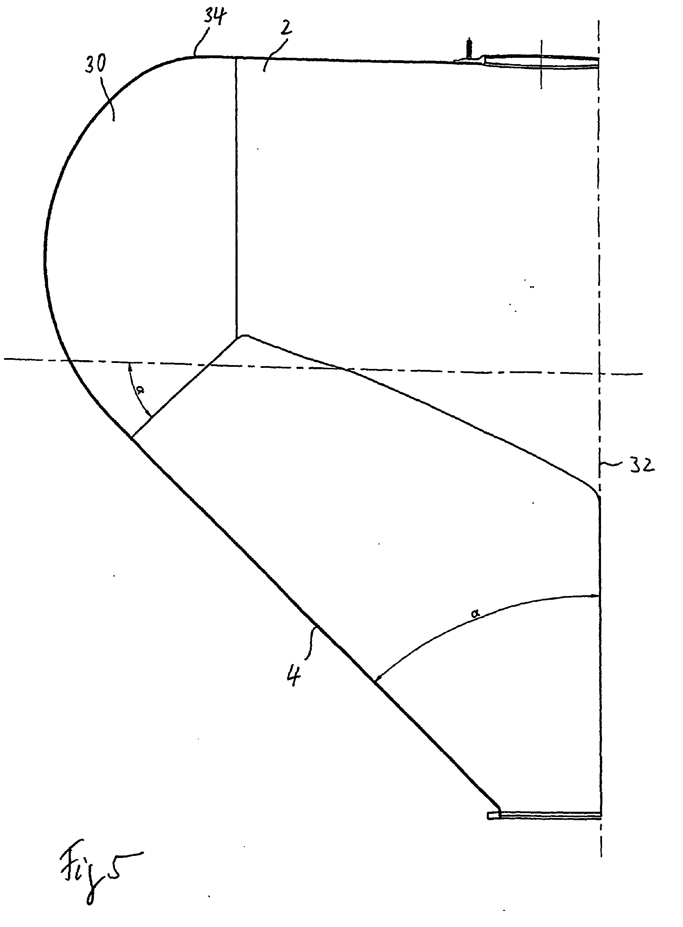

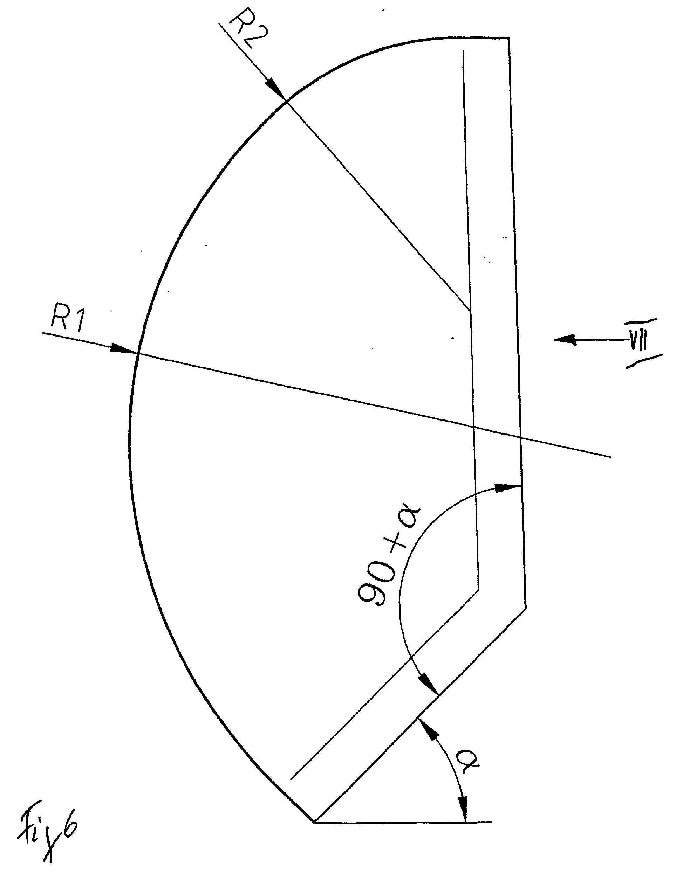

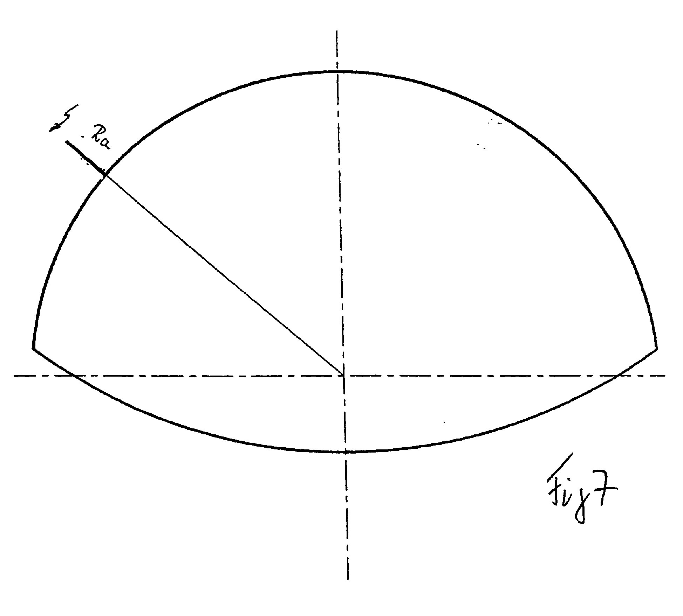

Demgegenüber zeigt Fig. 4 eine der Fig. 1 entsprechende Ansicht eines erfindungsgemäß ausgebildeten Silodruckbehälters. Auch dieser umfasst einen in entsprechender Weise ausgebildeten Druckbehältermantel 2 mit Schüttkegelabschnitten 4, 6. Anstelle eines aus einem rotationssymmetrisch hergestellten Rondenteil gebildeten Druckbehälterbodenteils ist ein asymmetrisches Preesformteil als Druckbehälterbodenteil 30 verwendet. Dieses Druckbehälterbodenteil 30 ist zwischen einer beheizbaren Oberschale und Unterschale in einem Pressvorgang geformt. Wie sich den Fig. 5, 6 und 7 entnehmen lässt, ist das Druckbehälterbodenteil 30, im Längsmittelvertikalschnitt betrachtet, aus einem ersten Kreisbogenabschnitt R1 und einem zweiten Kreisbogenabschnitt R2 gebildet, die ineinander übergehen. Das Druckbehälterbodenteil 30 überspannt einen Winkelabschnitt von 90° + α, wobei der Winkel α dem Neigungswinkel des Schüttkegelabschnitts 4 zur Vertikalen 32 entspricht (s. Fig. 5).

Man erkennt, dass das Druckbehälterbodenteil 30 mit seinem Krempenabschnitt 34 direkt an den Druckbehältermantel 2 angefügt ist und in seinem unteren Bereich auch unmittelbar an den Schüttkegelabschnitt 4 angrenzt und an diesen angeschweißt ist.

Die Herstellung des erfindungsgemäßen Silodruckbehälters ist beträchtlich vereinfacht, und die Herstellungskosten sind entsprechend erniedrigt.

## Patentansprüche

1. Silodruckbehälter, insbesondere für Silofahrzeuge, umfassend einen Druckbehältermantel (2), wenigstens einen Schüttkegelabschnitt (4, 6) und zwei Druckbehälterbodenteile (30), wobei die vorstehend genannten Bestandteile miteinander verschweißt sind, **dadurch gekennzeichnet,**
**dass** ein Druckbehälterbodenteil (30) oder beide Druckbehälterbodenteile ein asymmetrisches einstückig hergestelltes Pressformteil ist bzw. sind, welches bzw. welche, im Längsmittelvertikalschnitt betrachtet, ohne Zwischenordnung eines weiteren Behälterteils (16) oben an den Druckbehältermantel (2) angefügt ist bzw. sind und sich von der oberen Anbindungsstelle aus über einen Winkelbereich von mehr als 90° (90° + α) nach unten erstreckt bzw. erstrecken und stetig in den Schüttkegelabschnitt (4, 6) übergeht bzw. übergehen, ohne dass ein freier Randabschnitt des Schüttkegelabschnitts (4) verformt werden muss, um einen stetigen Übergang zu dem Druckbehälterbodenteil (30) zu erreichen.

2. Silodruckbehälter nach Anspruch 1, **dadurch**
**gekennzeichnet, dass** das asymmetrische Pressformteil, im Längsmitttelvertikalschnitt betrachtet, aus mindestens einem Kreisbogenabschnitt mit Radius R gebildet wird.

3. Silodruckbehälter nach Anspruch 2, **dadurch**
**gekennzeichnet, dass** das asymmetrische Pressformteil, im Längsmittelvertikalschnitt betrachtet, aus einem ersten Kreisbogenabschnitt mit Radius R1 und einem zweiten Kreisbogenabschnitt mit Radius R2 gebildet ist, die stetig ineinander übergehen.

## Claims

1. A silage container pressure vessel, in particular for silage vehicles, comprising a pressure container shell (2), at least one pouring cone section (4, 6) and two pressure container bottom elements (30), wherein the above mentioned components are welded together,
**characterized in that**
one or both pressure container bottom elements (30) is/are (an) asymmetric pressure-molded element(s) produced in one piece which, viewed in a vertical linear center sectional view, is/are attached without the interposition of a further container element (16) to the top of the pressure container shell (2) and extend(s) from the upper connecting point over an angled area of more than 90° (90° + α) toward the bottom and make(s) a constant transition into the pouring cone section (4, 6), without a free edge area of the pouring cone section (4) needing to be deformed in order to achieve a constant transition into the pressure container bottom element (30).

2. The silage container pressure vessel in accordance with claim 1, **characterized in that** the asymmetric pressure-molded element, viewed in a vertical linear center sectional view, is constituted by at least one section of an arc of a circle of a radius R.

3. The silage container pressure vessel in accordance with claim 2, **characterized in that** the asymmetric pressure-molded element, viewed in a vertical linear center sectional view, is constituted by a first section of an arc of a circle of the radius R1 and a second section of an arc of a circle of the radius R2, which make a continuous transition into each other.

## Revendications

1. Réservoir-silo sous pression, en particulier pour véhicules-silos, comprenant une enveloppe de réservoir sous pression (2), au moins une section conique de déversement (4, 6) et deux éléments de fond du réservoir sous pression (30), les éléments mentionnés précédemment étant soudés les uns aux autres,
**caractérisé, en ce**
**qu**'un élément de fond du réservoir sous pression (30) ou les deux éléments de fond du réservoir sous pression est ou sont un élément moulé sous pression d'un seul tenant, asymétrique, qui vu ou vus en coupe verticale médiane longitudinale est ou sont ajoutés en haut au niveau de l'enveloppe de réservoir sous pression (2) sans intercalation d'un autre élément de réservoir sous pression (16) et s'étend ou s'étendent vers le bas depuis le point de jonction supérieur sur une plage angulaire de plus de 90° (90° + α) et se mêle ou se mêlent progressivement en une section conique de déversement (4, 6) sans qu'une section de bord libre de la section conique de déversement (4) doive être déformée pour obtenir une transformation progressive en élément de fond du réservoir sous pression (30).

2. Réservoir-silo sous pression selon la revendication 1, **caractérisé en ce que** l'élément moulé sous pression asymétrique, vu en coupe verticale médiane longitudinale, est formé d'au moins d'un segment d'arc de cercle avec un rayon R.

3. Réservoir-silo sous pression selon la revendication 2, **caractérisé en ce que** l'élément moulé sous pression asymétrique, vu en coupe verticale médiane longitudinale, est formé d'un premier segment d'arc de cercle avec un rayon R1 et d'un deuxième segment d'arc de cercle avec un rayon R2, qui se mêlent progressivement l'un à l'autre.
